# EUROPEAN PATENT SPECIFICATION

(11) **EP 3 384 506 B1**
(45) Date of publication and mention of the grant of the patent: **17.06.2020**
(21) Application number: 16805444.3
(22) Date of filing: 02.12.2016
(51) Int. Cl.: H01B 3/56, H02B 13/055

(54) **METHODS FOR DIELECTRICALLY INSULATING ELECTRICAL ACTIVE PARTS**
VERFAHREN ZUR DIELEKTRISCHEN ISOLIERUNG VON AKTIVEN ELEKTRISCHEN TEILEN
PROCEDES D'ISOLATION DIELECTRIQUE DE COMPOSANTS ELECTRIQUES ACTIFS

(30) Priority: 04.12.2015 EP 15198062
(43) Date of publication of application: 10.10.2018
(73) Proprietor: Freie Universität Berlin, 14195 Berlin (DE)
(72) Inventor: FABRE, Jean, 30457 Wettbergen (DE); HARDINGHAUS, Ferdinand, 53604 Bad Honnef (DE); PERNICE, Holger, 30173 Hannover (DE); HASENSTAB-RIEBEL, Sebastian, 14532 Kleinmachnow (DE); BECKERS, Helmut, 02826 Görlitz (DE); STEINHAUER, Simon, 14193 Berlin (DE); SCHLÖDER, Tobias, 76137 Karlsruhe (DE)
(74) Representative: Maikowski & Ninnemann Patentanwälte Partnerschaft mbB
(86) International application number: PCT/EP2016/079635
(87) International publication number: WO 2017/093510

(56) References cited:
- US-A- 2 989 577
- US-A- 4 166 798
- DUNCAN LEONARD C ET AL: "The preparation and properties of trifluoromethoxy sulfur pentafluoride CF3OSF5 and cis-bis(trifluoromethoxy)tetrafluorosulfur (VI) (CF3O)2SF4", INORGANIC CHEMISTRY, AMERICAN CHEMICAL SOCIETY, EASTON, US, vol. 3, no. 6, 1 January 1964 (1964-01-01) , pages 850-852, XP009090936, ISSN: 0020-1669, DOI: 10.1021/IC50016A015 cited in the application

## Description

This application claims priority to European application No. 15198062.0 filed on the 4th of December 2015.

The invention concerns methods for dielectrically insulating electrical active parts using certain sulphur fluorides, as well as compositions and apparatus comprising such compounds.

Dielectrically insulation media in liquid or gaseous state are applied for the insulation of electrical active parts in a wide variety of electrical apparatus, e.g. in switchgears or transformers.

Mixtures of SF₆ and N₂ are widely applied as dielectrically insulating medium. Efforts have been made in the past to provide alternative dielectrically insulating media.

WO 2014/096414 concerns a method of dielectrically insulating electrical active parts using certain fluorinated compounds, e.g. fluorinated ethers and peroxides. US 2 989 577 A discloses an apparatus comprising different dielectric gas mixtures comprising a mixture of 50% SF6, 50% CF3SF5, pure SF6, pure CF3SF5, and a mixture of 75% CF3SF5, 25% SF6.

The object of the present invention is to provide improved methods and/or compositions for the electrical insulation of electrical active parts.

Advantageously, the methods and compositions of the present invention show improved insulation, arc-extinguishing and/or switching performance. Also advantageously, the methods and compositions of the present invention show advantageous environmental impact when the insulating medium is released into the atmosphere, e.g. as measured by an improved global warming potential (GWP) and/or improved ozone depletion. Also advantageously, the methods and compositions of the present invention show an improved toxicological behavior, as measured for example by a higher LC50 and/or a higher Occupational Exposure Limit. Furthermore, the methods and compositions advantageously show an improved dew point, vapour pressure, boiling point, dielectrical strengths, and/or thermal stability of the insulating media. Additionally, the compositions according to this invention advantageously show an improved chemical inertness against the construction materials used e.g. for the electrical active parts and/or improved heat transfer properties.

These and other objectives are solved by the present invention as outlined in the claims.

Accordingly, a first aspect of the present invention concerns a method for dielectrically insulating an electrical active part wherein the electrical active part is arranged in a gas-tight housing comprising an insulating medium consisting of, consisting essentially of, or comprising a compound of general formula (I): SF₍₆₋ₙ₎(OR)ₙ wherein n is 1, 2, 3, 4, or 5; and R is alkyl, alkenyl, alkynyl, aryl, fluorosubstituted alkyl, fluorosubstituted alkenyl, fluorosubstituted alkynyl or fluorosubstituted aryl.

The term "fluorosubstituted" is intended to denote a group wherein at least one hydrogen atom is replaced by one fluorine atom.

The term "aryl" is intended to denote a monovalent radical derived from an aromatic nucleus such as, in particular, a C6-C10 aromatic nucleus, in particular phenyl or naphthyl. The aryl group can optionally be substituted, e.g. substituted with at least one alkyl group.

The term "alkyl" is intended to denote an optionally substituted saturated monovalent hydrocarbon radical, such as, in particular, a C1-C6 alkyl. By way of example, mention may be made of methyl, ethyl, propyl, isopropyl, butyl, t-butyl, pentyl, isopentyl and hexyl. The alkyl may be optionally substituted, e.g. with halogen, aryl, or heteroaryl. A preferred alkyl group is methyl. The term "alkyl" also encompasses cycloalkyl groups. Cycloalkyl groups are optionally substituted cycles of saturated hydrocarbon-based groups. By way of example, mention may be made of cyclopropyl, cyclobutyl, cyclopentyl, and cyclohexyl.

The term "alkenyl" is intended to denote a straight or branched acyclic monovalent hydrocarbon radical having one or more carbon-carbon double bonds of either E or Z stereochemistry where applicable. The term includes, for example, vinyl, allyl, 1-butenyl, 2-butenyl, and 2-methyl-2-propenyl.

The term "alkynyl" is intended to denote a straight or branched chain monovalent hydrocarbon radical having from two to six carbon atoms and at least one carbon-carbon triple bond and optionally one or more carbon-carbon double bonds. Examples include ethynyl, propynyl and 3,4-pentadiene-1-ynyl.

The term "consisting essentially of' as used herein is intended to denote a composition comprising the components as specified as well as other components in trace amounts wherein the presence of the other components does not change the essential characteristics of the specified subject matter.

Preferably, R is alkyl. More preferably, R is perfluorinated alkyl. Hence, all hydrogen atoms in R have been replaced by fluorine atoms. Thus, R can be chosen from the group consisting of perfluorinated methyl, ethyl, isopropyl, n-propyl, isobutyl, n-butyl or tert-butyl, n-pentyl or isopentyl groups, most preferably, chosen from trifluoromethyl, pentafluoroethyl, and heptafluoroisopropyl. Specifically, R is CF₃.

Alternatively, R is partially fluorinated. In this case, R is chosen from the group consisting of partially fluorinated methyl, ethyl, isopropyl, n-propyl, isobutyl, n-butyl, tert-butyl, n-pentyl and isopentyl. Preferably, R is indepedently chosen from difluoromethyl, tetrafluoroethyl, n-hexafluoropropyl and isohexafluoropropyl, more preferably difluoromethyl.

The counter n is preferably 1.

Most preferably, the compound of general formula (I) is trifluoromethoxy sulphurpentafluoride SF₅(OCF₃).

Preferably, the concentration of the compound of general formula (I) in the insulating medium is at least 1 vol%, more preferably at least 2.5 vol%, most preferably at least 5 vol%. If mixtures of the compound of general formula (I) and other components are used, advantageously the concentration is equal to or lower than 95 vol%, more preferably 85 vol%, most preferably 75 vol%.

In the frame of the present invention, the singular is intended to include the plural, and vice versa.

Compounds of the general formula (I) can be prepared as described in Duncan, L.C.; Cady, G.H., Inorganic Chemistry, 1964, 3(6), pp. 850 - 852. For example, SF₅(OCF₃) can be prepared from CF₃OF and SF₄ and SF₄(OCF₃)₂ can be prepared from SF₄ and CF₃-O-O-CF₃.

Preferably, the insulating medium used in the inventive method comprises the compound of formula (I) and at least one further compound selected from the list consisting of an inert gas, a perfluorinated or partially fluorinated ketone, a perfluorinated or partially fluorinated ether, a perfluorinated or partially fluorinated ester, a perfluorinated or partially fluorinated cyano compound and a hydrocarbon compound. More preferably, the at least one compound is an inert gas selected from the group consisting of air, synthetic air, an air component, N₂, O₂, CO₂, N₂O, He, Ne, Ar, Xe and SF₆; preferably the at least one compound is N₂.

Preferably, the concentration of the compound of general formula (I) in the composition is at least 1 vol%, more preferably at least 2.5 vol%, most preferably at least 5 vol%. If mixtures of the compound of general formula (I) and other components are used, advantageously the concentration is equal to or lower than 95 vol%, more preferably 85 vol%, most preferably 75 vol%.

The term "inert gas" is intended to denote a gas that does not react with the compounds according to the invention. Preferably, the inert gas is chosen from the list consisting of air, synthetic air, an air component, N₂, O₂, CO₂, N₂O, He, Ne, Ar, Xe or SF₆; more preferably, the inert gas is N₂.

Preferably, the at least one compound is a perfluorinated or partially fluorinated ketone. The term "ketone" is intended to denote a compound incorporating at least one carbonyl group with two carbon atoms attached to the carbon of the carbonyl group. It shall encompass saturated compounds and unsaturated compounds including double and/or triple bonds. The at least partially fluorinated alkyl chain of the ketones can be linear or branched. The term "ketone" shall also encompass compounds with a cyclic carbon backbone. The term "ketone" may comprise additional in-chain hetero-atoms, e.g. at least one heteroatom being part of the carbon backbone and/or being attached to the carbon backbone. More preferably, the at least one compound is a perfluorinated ketone. Examples of suitable perfluorinated ketones include 1,1,1,3,4,4,4-heptafluoro-3-(trifluoromethyl)-butan-2-one; 1,1,1,3,3,4,4,5,5,5-decafluoropentan-2-one; 1,1,1,2,2,4,4,5,5,5-decafluoropentan-3-one, 1,1,1,4,4,5,5,5,-octafluoro-3-bis-(trifluoromethyl)-pentan-2-one; and most preferably heptafluoroisopropyl-trifluoromethyl-ketone.

Also preferably, the at least one compound is a perfluorinated or partially fluorinated ether. The term "ether" is intended to denote a compound incorporating at least one "-C-O-C-" moiety. Especially suitable examples include pentafluoro-ethyl-methyl ether and 2,2,2-trifluoroethyl-trifluoromethyl ether.

Also preferably, the at least one compound is a perfluorinated or partially fluorinated ester, i.e. a compound incorporating at least one "-C(O)O-" moiety. Suitable compounds are known in the art, especially suitable examples include methyl, ethyl, and trifluoromethyl esters of trifluoroacetic acid.

Also preferably, the at least one compound is a perfluorinated or partially fluorinated cyano compound, i.e. a compound incorporating at least one moiety of the structure "-C≡N". Preferably, the cyano compound is perfluorinated, more preferably the cyano compound is chosen from the list consisting of perfluorinated methyl, ethyl, isopropyl, propyl, butyl, isobutyl and tertbutyl nitrile.

Also preferably, the at least one compound is a perfluorinated or partially fluorinated hydrocarbon compound. "Hydrocarbon compound" is intended to denote a saturated or unsaturated hydrocarbon, which may in addition to the fluoro substitution also be substituted by other halogen atoms, e.g. Cl, Br, and/or I. Suitable examples include CHF₃, C₂F₄, CF₃CF₂CF₂CF₂I, and CF₂Cl₂.

The term "electrical active part" has to be understood very broadly. Preferably, it covers any part which is used for the generation, the distribution or the usage of electrical energy provided it comprises a gas-tight housing wherein the dielectrically insulating medium provides for the dielectrically insulation of parts which bear voltage or current. Preferably, the electrical active parts are medium voltage or high voltage parts. The term "medium voltage" relates to a voltage in the range of 1 kV to 72 kV ; the term "high voltage" refers to a voltage of more than 72 kV. While these are preferred electrical active parts in the frame of the present invention, the parts may also be low voltage parts with a voltage below 1 kV being concerned.

It has to be noted that the electrical active parts of the invention can be "stand alone" parts, or they can be part of an assembly of parts, e.g. of an apparatus. This will now be explained in detail.

The electrical active part can be a switch, for example, a fast acting earthing switch, a disconnector, a load-break switch or a puffer circuit breaker, in particular a medium-voltage circuit breaker (GIS-MV), a generator circuit breaker (GIS-HV), a high voltage circuit breaker, a bus bar a bushing, a gas-insulated cable, a gas-insulated transmission line, a cable joint, a current transformer, a voltage transformer or a surge arrester.

The electrical active part may also be part of an electrical rotating machine, a generator, a motor, a drive, a semiconducting device, a computing machine, a power electronics device or high frequency parts, for example, antennas or ignition coils.

The method of the invention is especially suited for medium voltage switchgears and high voltage switchgears.

The insulating medium used in the method of the invention is preferably in the gaseous state when used in the method of the invention. However, depending on the conditions, e.g. the temperature and the pressure, under which the method is performed, the insulating medium can also be, at least partially, in the liquid state.

In the electrical active part, the insulating medium is preferably at a pressure of equal to or greater than 0.1 bar (abs.). The insulating medium is preferably at a pressure equal to or lowers than 30 bar (abs). A preferred pressure range is from 1 to 20 bar (abs.).

The partial pressure of the compound of general structure (I) in the gaseous phase depends, i.a. upon its concentration in the insulating medium. If the dielectrically insulating medium consists of the compound of general structure (I) its partial pressure is equal to the total pressure and corresponds to the ranges given above. If the medium includes an inert gas, the partial pressure of the compound of general structure (I) is correspondingly lower. A partial pressure of the compound of general structure (I) which is equal to or lower than 10 bar (abs) is preferred.

It is also preferred that the compound or the mixture, respectively, is such that under the climate conditions or the temperature in the ambience of the electrical apparatus, under the pressure in the electrical part, essentially no condensation of the components in the dielectrically insulating medium occurs. The term "essentially no condensation" denotes that at most 5 % by weight, preferably at most 2 % by weight, of the dielectrically insulating medium condenses. For example, the amounts of compound of formula (I) the kind and amount of inert gas are selected such that the partial pressure of compound of formula (I) is lower than the pressure where condensation of compound of formula (I) is observed at -20°C.

In a second aspect, the present invention concerns a composition consisting of, consisting essentially of, or comprising at least one compound of general formula (I): SF₍₆₋ₙ₎(OR)ₙ wherein n is 1, 2, 3, 4, or 5; and R is alkyl, alkenyl, alkynyl, aryl, fluorosubstituted alkyl, fluorosubstituted alkenyl, fluorosubstituted alkynyl or fluorosubstituted aryl; and at least one further compound selected from the group consisting of an inert gas, a perfluorinated or partially fluorinated ketone, a perfluorinated or partially fluorinated ether, a perfluorinated or partially fluorinated ester, a perfluorinated or partially fluorinated cyano compound and a hydrocarbon compound.

Preferably, the concentration of the compound of general formula (I) in the composition is at least 1 vol%.

Preferably, the composition consists of, consists essentially of, or comprises SF₅(OCF₃) and at least one compound selected from the group consisting of an inert gas, a perfluorinated or partially fluorinated ketone, a perfluorinated or partially fluorinated ether, a perfluorinated or partially fluorinated ester, a perfluorinated or partially fluorinated cyano compound and a hydrocarbon compound.

More preferably, the composition consists of, consists essentially of, or comprises SF₅(OCF₃) and at least one compound selected from the group consisting of air, synthetic air, an air component, N₂, O₂, CO₂, N₂O, He, Ne, Ar, Xe or SF₆; preferably consisting of, consisting essentially of, or comprising SF₅(OCF₃) and N₂.

In a third object, the present invention concerns an apparatus for the generation, distribution and/or usage of electrical energy wherein the apparatus comprises an electrical active part arranged in a gas-tight housing and said gas-tight housing containing an insulating medium comprising, consisting essentially of, or consisting of at least one compound of general formula (I): SF₍₆₋ₙ₎(OR)ₙ wherein n is 1, 2, 3, 4, or 5; and R is alkyl, alkenyl, alkynyl, aryl, fluorosubstituted alkyl, fluorosubstituted alkenyl, fluorosubstituted alkynyl or fluorosubstituted aryl; or containing an insulating medium consisting of, consisting essentially of, or comprising the inventive composition as defined above. Preferably, the insulating medium consists of, consists essentially of, or comprises SF₅(OCF₃). Also preferably, the apparatus is a medium-voltage or high-voltage switchgear.

Another object of the present invention concerns the use of the compounds or the mixtures of this invention, as herein described, as dielectrically insulating medium or as constituent of a dielectrically insulating medium as well as their use as an dry etching agent, e.g. a chamber cleaning agent, specifically, for plasma-enhanced chamber cleaning as a replacement for NF₃.

Another object of the present invention is the use of the compounds of general formula (I) as replacements for fluorocarbons or hydrofluorocarbons as blowing agents in the manufacture of closed-cell polyurethane, phenolic and thermoplastic foams, as propellants in aerosols, as heat transfer media, as fire extinguishing agents, as power cycle working fluids such as for heat pumps, as inert media for polymerization reactions, as fluids for removing particulates from metal surfaces, as carrier fluids that may be used, for example, to place a fine film of lubricant on metal parts, as buffing abrasive agents to remove buffing abrasive compounds from polished surfaces such as metal, as displacement drying agents for removing water, such as from jewellery or metal parts, as resist developers in conventional circuit manufacturing techniques including chlorine-type developing agents, or as strippers for photoresists when used with, for example, a chlorohydrocarbon such as 1,1,1-trichloroethane or trichloroethylene.

Another object of the present invention is the use of a compound of general formula (I): SF₍₆₋ₙ₎(OR)ₙ wherein n is 1, 2, 3, 4, or 5; and R is alkyl, alkenyl, alkynyl, aryl, fluorosubstituted alkyl, fluorosubstituted alkenyl, fluorosubstituted alkynyl or fluorosubstituted aryl as a dielectric medium to insulate an electrical active part. The preferred electrical active part can be a switch, for example, a fast acting earthing switch, a disconnector, a load-break switch or a puffer circuit breaker, in particular a medium-voltage circuit breaker (GIS-MV), a generator circuit breaker (GIS-HV), a high voltage circuit breaker, a bus bar a bushing, a gas-insulated cable, a gas-insulated transmission line, a cable joint, a current transformer, a voltage transformer or a surge arrester.

The following examples further explain the invention without intention to limit it.

### Examples

### Example1a: Manufacture of SF₅(OCF₃)

SF₅(OCF₃) is prepared according to Duncan, L.C.; Cady, G.H., Inorganic Chemistry, 1964, 3(6), pp. 850 - 852.

### Example 1b: Manufacture of the compositions

As described in WO98/23363, a homogenous mixture consisting SF₅(OCF₃) and N₂ in a volume ratio 1:4 is manufactured in an apparatus comprising a static mixer and a compressor.

### Example 2: Provision of an earth cable containing the dielectrically insulating medium of example 1

The composition of example 1b is directly fed into an earth cable for high voltage, until a total pressure of 10 bar (abs) is achieved in the cable.

### Example 3: A switchgear containing SF₅(OCF₃) and N₂ in a volume ratio 1:4

A switchgear is used which contains a switch surrounded by a gas-tight metal case. The composition of example 1b is passed into the gas tight metal case via a valve until a pressure of 18 bar (abs) is achieved.

## Claims

1. A method for dielectrically insulating an electrical active part wherein the electrical active part is arranged in a gas-tight housing comprising an insulating medium consisting of, consisting essentially of, or comprising a compound of general formula (I):
SF₍₆₋ₙ₎(OR)ₙ (I)
wherein n is 1, 2, 3, 4, or 5; and R is alkyl, alkenyl, alkynyl, aryl, fluorosubstituted alkyl, fluorosubstituted alkenyl, fluorosubstituted alkynyl or fluorosubstituted aryl.

2. The method according to claim 1 wherein n is 1.

3. The method according to claim 1 or 2 wherein R is fluorosubstituted alkyl, preferably perfluorinated alkyl.

4. The method according to claim 3 wherein R is CF₃.

5. The method according to claim 1 wherein the compound is trifluoromethoxy sulphurpentafluoride SF₅(OCF₃).

6. The method according to any one of the claims 1 to 5 wherein the concentration of the compound of general formula (I) in the insulating medium is at least 1 vol%, preferably at least 2.5 vol%, more preferably at least 5 vol%.

7. A composition consisting of, consisting essentially of, or comprising at least one compound of general formula (I)
SF₍₆₋ₙ₎(OR)ₙ (I)
wherein n is 1, 2, 3, 4, or 5; and R is alkyl, alkenyl, alkynyl, aryl, fluorosubstituted alkyl, fluorosubstituted alkenyl, fluorosubstituted alkynyl or fluorosubstituted aryl and at least one further compound selected from the group consisting of an inert gas, a perfluorinated or partially fluorinated ketone, a perfluorinated or partially fluorinated ether, a perfluorinated or partially fluorinated ester, a perfluorinated or partially fluorinated cyano compound and a hydrocarbon compound wherein, preferably, the concentration of the compound of general formula (I) in the composition is at least 1 vol%.

8. The composition according to claim 7 consisting of, consisting essentially of, or comprising SF₅(OCF₃) and at least one compound selected from the group consisting of an inert gas, a perfluorinated or partially fluorinated ketone, a perfluorinated or partially fluorinated ether, a perfluorinated or partially fluorinated ester, a perfluorinated or partially fluorinated cyano compound and a hydrocarbon compound.

9. The composition of claim 8 consisting of, consisting essentially of, or comprising SF₅(OCF₃) and at least one compound selected from the group consisting of air, synthetic air, an air component, N₂, O₂, CO₂, N₂O, He, Ne, Ar, Xe or SF₆; preferably consisting of, consisting essentially of, or comprising SF₅(OCF₃) and N₂.

10. An apparatus for the generation, distribution and/or usage of electrical energy wherein the apparatus comprises an electrical active part arranged in a gas-tight housing, said gas-tight housing containing an insulating medium consisting of, consisting essentially of, or comprising at least one compound of general formula (I)
SF₍₆₋ₙ₎(OR)ₙ (I)
wherein n is 1, 2, 3, 4, or 5; and R is alkyl, alkenyl, alkynyl, aryl, fluorosubstituted alkyl, fluorosubstituted alkenyl, fluorosubstituted alkynyl or fluorosubstituted aryl;
or containing an insulating medium consisting of, consisting essentially of, or comprising the composition according to any one of claims 7 to 9.

11. The apparatus of claim 10 wherein the insulating medium consists of, consists essentially of, or comprises SF₅(OCF₃).

12. The apparatus of claim 10 or 11 wherein the concentration of the compound of general formula (I) in the insulating medium is at least 1 vol%.

13. Use of a compound of general formula (I):
SF₍₆₋ₙ₎(OR)ₙ (I)
wherein n is 1, 2, 3, 4, or 5; and R is alkyl, alkenyl, alkynyl, aryl, fluorosubstituted alkyl, fluorosubstituted alkenyl, fluorosubstituted alkynyl or fluorosubstituted aryl as a dielectric medium to insulate an electrical active part.

14. The use according to claim 13 wherein the compound is SF₅(OCF₃).

## Patentansprüche

1. Verfahren zum dielektrischen Isolieren eines elektrisch aktiven Teils, wobei der elektrisch aktive Teil in einem gasdichten Gehäuse angeordnet ist, aufweisend ein isolierendes Medium, das eine Verbindung der allgemeinen Formel (I):
SF₍₆₋ₙ₎(OR)ₙ (I)
aufweist, daraus besteht oder im Wesentlichen daraus besteht, wobei n für 1, 2, 3, 4 oder 5; und R für Alkyl, Alkenyl, Alkinyl, Aryl, fluorsubstituiertes Alkyl, fluorsubstituiertes Alkenyl, fluorsubstituiertes Alkinyl oder fluorsubstituiertes Aryl steht.

2. Verfahren nach Anspruch 1, wobei n für 1 steht.

3. Verfahren nach Anspruch 1 oder 2, wobei R für fluorsubstituiertes Alkyl, vorzugsweise perfluoriertes Alkyl, steht.

4. Verfahren nach Anspruch 3, wobei R für CF₃ steht.

5. Verfahren nach Anspruch 1, wobei es sich bei der Verbindung um Trifluormethoxyschwefelpentafluorid SF₅(OCF₃) handelt.

6. Verfahren nach einem der Ansprüche 1 bis 5, wobei die Konzentration der Verbindung der allgemeinen Formel (I) in dem isolierenden Medium mindestens 1 Vol.-%, vorzugsweise mindestens 2,5 Vol.-%, weiter bevorzugt mindestens 5 Vol.-%, beträgt.

7. Zusammensetzung, die mindestens eine Verbindung der allgemeinen Formel (I)
SF₍₆₋ₙ₎(OR)ₙ (I)
wobei n für 1, 2, 3, 4 oder 5; und R für Alkyl, Alkenyl, Alkinyl, Aryl, fluorsubstituiertes Alkyl, fluorsubstituiertes Alkenyl, fluorsubstituiertes Alkinyl oder fluorsubstituiertes Aryl steht, und mindestens eine weitere Verbindung aus der Gruppe bestehend aus einem Inertgas, einem perfluorierten oder teilfluorierten Keton, einem perfluorierten oder teilfluorierten Ether, einem perfluorierten oder teilfluorierten Ester, einer perfluorierten oder teilfluorierten Cyanoverbindung und einer Kohlenwasserstoffverbindung aufweist, daraus besteht oder im Wesentlichen daraus besteht, wobei vorzugsweise die Konzentration der Verbindung der allgemeinen Formel (I) in der Zusammensetzung mindestens 1 Vol.-% beträgt.

8. Zusammensetzung nach Anspruch 7, die SF₅(OCF₃) und mindestens eine Verbindung aus der Gruppe bestehend aus einem Inertgas, einem perfluorierten oder teilfluorierten Keton, einem perfluorierten oder teilfluorierten Ether, einem perfluorierten oder teilfluorierten Ester, einer perfluorierten oder teilfluorierten Cyanoverbindung und einer Kohlenwasserstoffverbindung aufweist, daraus besteht oder im Wesentlichen daraus besteht.

9. Zusammensetzung nach Anspruch 8, die SF₅(OCF₃) und mindestens eine Verbindung aus der Gruppe bestehend aus Luft, synthetischer Luft, einer Luftkomponente, N₂, O₂, CO₂, N₂O, He, Ne, Ar, Xe oder SF₆ aufweist, daraus besteht oder im Wesentlichen daraus besteht und vorzugsweise SF₅(OCF₃) und N₂ aufweist, daraus besteht oder im Wesentlichen daraus besteht.

10. Vorrichtung zur Erzeugung, Verteilung und/oder Verwendung von elektrischer Energie, wobei die Vorrichtung einen elektrisch aktiven Teil umfasst, der in einem gasdichten Gehäuse angeordnet ist, wobei das gasdichte Gehäuse ein isolierendes Medium enthält, das eine Verbindung der allgemeinen Formel (I)
SF₍₆₋ₙ₎(OR)ₙ (I)
wobei n für 1, 2, 3, 4 oder 5; und R für Alkyl, Alkenyl, Alkinyl, Aryl, fluorsubstituiertes Alkyl, fluorsubstituiertes Alkenyl, fluorsubstituiertes Alkinyl oder fluorsubstituiertes Aryl steht, aufweist, daraus besteht oder im Wesentlichen daraus besteht;
oder ein isolierendes Medium enthält, das die Zusammensetzung nach einem der Ansprüche 7 bis 9 aufweist, daraus besteht oder im Wesentlichen daraus besteht.

11. Vorrichtung nach Anspruch 10, wobei das isolierende Medium SF₅(OCF₃) aufweist, daraus besteht oder im Wesentlichen daraus besteht.

12. Vorrichtung nach Anspruch 10 oder 11, wobei die Konzentration der Verbindung der allgemeinen Formel (I) in dem isolierenden Medium mindestens 1 Vol.-% beträgt.

13. Verwendung einer Verbindung der allgemeinen Formel (I) :
SF₍₆₋ₙ₎(OR)ₙ (I)
als dielektrisches Medium zur Isolierung eines elektrisch aktiven Teils, wobei n für 1, 2, 3, 4 oder 5; und R für Alkyl, Alkenyl, Alkinyl, Aryl, fluorsubstituiertes Alkyl, fluorsubstituiertes Alkenyl, fluorsubstituiertes Alkinyl oder fluorsubstituiertes Aryl steht.

14. Verwendung nach Anspruch 13, wobei es sich bei der Verbindung um SF₅(OCF₃) handelt.

## Revendications

1. Procédé pour l'isolation diélectrique d'une partie active électrique, dans lequel la partie active électrique étant disposée dans un boîtier étanche aux gaz comprenant un milieu d'isolation constitué de, constitué essentiellement de, ou comprenant un composé de formule générale (I):
SF₍₆₋ₙ₎(OR)ₙ (I)
où n est 1, 2, 3, 4, ou 5; et R est alkyle, alcényle, alcynyle, aryle, alkyle fluorosubstitué, alcényle fluorosubstitué, alcynyle fluorosubstitué ou aryle fluorosubstitué.

2. Procédé selon la revendication 1, dans lequel n est 1.

3. Procédé selon la revendication 1 ou 2, dans lequel R est alkyle fluorosubstitué, préférablement alkyle perfluoré.

4. Procédé selon la revendication 3, dans lequel R est CF₃.

5. Procédé selon la revendication 1, dans lequel le composé est le trifluorométhoxypentafluorure de soufre SF₅(OCF₃).

6. Procédé selon l'une quelconque des revendications 1 à 5, dans lequel la concentration du composé de formule générale (I) dans le milieu d'isolation est d'au moins 1 % en volume, préférablement d'au moins 2,5 % en volume, plus préférablement d'au moins 5 % en volume.

7. Composition constituée de, constituée essentiellement de, ou comprenant au moins un composé de formule générale (I)
**SF₍₆₋ₙ₎(OR)ₙ** **(I)**
où n est 1, 2, 3, 4, ou 5; et R est alkyle, alcényle, alcynyle, aryle, alkyle fluorosubstitué, alcényle fluorosubstitué, alcynyle fluorosubstitué ou aryle fluorosubstitué et au moins un composé supplémentaire choisi dans le groupe constitué par un gaz inerte, une cétone perfluorée ou partiellement fluorée, un éther perfluoré ou partiellement fluoré, un ester perfluoré ou partiellement fluoré, un composé cyano perfluoré ou partiellement fluoré et un composé hydrocarboné, dans lequel préférablement, la concentration du composé de formule générale (I) dans la composition est d'au moins 1 % en volume.

8. Composition selon la revendication 7 constituée de, constituée essentiellement de, ou comprenant du SF₅(OCF₃) et au moins un composé choisi dans le groupe constitué par un gaz inerte, une cétone perfluorée ou partiellement fluorée, un éther perfluoré ou partiellement fluoré, un ester perfluoré ou partiellement fluoré, un composé cyano perfluoré ou partiellement fluoré et un composé hydrocarboné.

9. Composition selon la revendication 8 constituée de, constituée essentiellement de, ou comprenant du SF₅(OCF₃) et au moins un composé choisi dans le groupe constitué par l'air, l'air synthétique, un composant de l'air, N₂, O₂, CO₂, N₂O, He, Ne, Ar, Xe ou SF₆ ; préférablement constituée de, constituée essentiellement de, ou comprenant du SF₅(OCF₃) et du N₂.

10. Appareil pour la génération, la distribution et/ou l'usage d'énergie électrique, dans lequel l'appareil comprenant une partie active électrique disposée dans un boîtier étanche aux gaz, ledit boîtier étanche aux gaz contenant un milieu d'isolation constitué de, constitué essentiellement de, ou comprenant au moins un composé de formule générale (I)
**SF₍₆₋ₙ₎(OR)ₙ** **(I)**
où n est 1, 2, 3, 4, ou 5; et R est alkyle, alcényle, alcynyle, aryle, alkyle fluorosubstitué, alcényle fluorosubstitué, alcynyle fluorosubstitué ou aryle fluorosubstitué;
ou contenant un milieu d'isolation constitué de, constitué essentiellement de, ou comprenant la composition selon l'une quelconque des revendications 7 à 9.

11. Appareil selon la revendication 10, dans lequel milieu d'isolation étant constitué de, étant constitué essentiellement de, ou comprenant du SF₅(OCF₃).

12. Appareil selon la revendication 10 ou 11, dans lequel la concentration du composé de formule générale (I) dans le milieu d'isolation est d'au moins 1 % en volume.

13. Utilisation d'un composé de formule générale (I):
**SF₍₆₋ₙ₎(OR)ₙ** **(I)**
où n est 1, 2, 3, 4, ou 5; et R est alkyle, alcényle, alcynyle, aryle, alkyle fluorosubstitué, alcényle fluorosubstitué, alcynyle fluorosubstitué ou aryle fluorosubstitué en tant qu'un milieu diélectrique pour isoler une partie active électrique.

14. Utilisation selon la revendication 13, dans lequel le composé est SF₅(OCF₃).
